# EUROPÄISCHE PATENTANMELDUNG

(11) **EP 4 180 477 A1**
(43) Veröffentlichungstag der Anmeldung: **17.05.2023**
(21) Anmeldenummer: 21208187.1
(22) Anmeldetag: 15.11.2021
(51) Int. Cl.: C08G 59/24, C08G 59/40, C08G 59/42, C08G 59/50, C08G 59/68

(54) **EPOXIDHARZ-ZUSAMMENSETZUNGEN ZUR HERSTELLUNG LAGERSTABILER COMPOSITES**

(71) Anmelder: Evonik Operations GmbH, 45128 Essen (DE)
(72) Erfinder: PÜTH, Jan, 48165 Münster (DE); STEFFENS, Dirk, 48249 Dülmen (DE); ICKERT, Leif, 40235 Düsseldorf (DE); PATEL, Pritesh, 18031 Breinigsville, PA (US); DE NARDO, Sebastian, 47228 Duisburg (DE)
(74) Vertreter: Evonik Patent Association

(57) **Zusammenfassung**

Die vorliegende Erfindung ist gerichtet auf Zusammensetzungen umfassend
A) 75 - 95 Gew.-% mindestens einer Epoxidverbindung,
B) 3 - 22 Gew.-% einer Härterzusammensetzung bestehend aus B1) mindestens einer Verbindung mit mindestens zwei mit Epoxidgruppen der Komponente A) reaktiven Wasserstoffatomen und B2) Dicyandiamid,
C) 0,2 - 4 Gew.-% mindestens eines Anhydrids und
D) 0,1 - 5 Gew.-% mindestens eines Härtungsbeschleunigers,
wobei sich die Gew.-%-Angaben beziehen auf die Summe der Komponenten A) bis D);
Verfahren zur Herstellung der erfindungsgemäßen Zusammensetzungen; ihre Verwendung;
Verfahren zur Herstellung von Halbzeugen im B-Stage; die nach dem Verfahren erhältlichen Halbzeuge im B-Stage; Verfahren zur Herstellung von Composites; die nach dem Verfahren erhältlichen Composites; sowie eine Härterzusammensetzung bestehend aus B1) mindestens einer Verbindung mit mindestens zwei mit Epoxidgruppen der Komponente A) reaktiven Wasserstoffatomen und B2) Dicyandiamid.

## Beschreibung

Gegenstand der Erfindung sind Epoxidharz-Zusammensetzungen umfassend mindestens eine Harzkomponente und mindestens eine Härterkomponente, die für den Einsatz als duroplastische Matrix bei der Herstellung von Composites geeignet sind.

Epoxidharz-Zusammensetzungen bestehend aus mindestens einem Epoxidharz und mindestens einem Härter, z. B. einem Amin, Anhydrid oder Dicyandiamid, sind seit langem bekannt und werden in Anwendungsfeldern wie z. B. Coatings, Composites oder Flooring eingesetzt.

Unter Composites sind im Rahmen dieser Erfindung insbesondere Verbundstoffe, Verbund-Bauteile, Verbundwerkstoffe, Faserverbundwerkstoffe, Verbund-Formteile, faserverstärkte Kunststoffe oder faserverstärkte Bauteile, Prepregs, Towpregs, Faser-Matrix-Halbzeuge, Faser-Matrix-Laminate, SMCs (Sheet Moulding Compounds), SMC-Composites (SMC-Faser-Matrix-Halbzeuge), BMCs (Bulk Moulding Compounds) und BMC-Composites (BMC-Faser-Matrix-Halbzeuge) zu verstehen.

Unter Composites werden weiter bevorzugt Faserverbundwerkstoffe umfassend eine Kunststoff- oder Harzmatrix verstanden. Solche Composites zeichnen sich durch eine hohe spezifische Steifigkeit und Festigkeit bei geringem Gewicht aus und rücken daher im Rahmen steigender Anforderungen an eine effiziente Nutzung knapper Ressourcen immer stärker in den Blickpunkt verschiedener Industrien, z. B. der Automobilindustrie.

Verfahren zur Herstellung von Composites lassen sich in einstufige und mehrstufige Verfahren einteilen. Einstufige Verfahren umfassen insbesondere RTM-Verfahren (RTM = Resin Transfer Moulding) und VARTM-Verfahren (VARTM = Vacuum Assisted Resin Transfer Moulding). Mehrstufige Verfahren basieren insbesondere auf der Verwendung von Prepregs oder SMCs (Sheet Moulding Compounds).

Bei mehrstufigen Verfahren zur Herstellung von lagerstabilen Composites wird in einem ersten Schritt eine Faser mit einer Matrix imprägniert. Anschließend wird das resultierende Faser-Matrix-Halbzeug in einen B-Stage überführt. Unter einem B-Stage versteht der Fachmann einen Zustand, in dem die reaktiven Komponenten nur teilweise miteinander reagiert haben, bis ein Umsatz- bzw. Viskositätsplateau erreicht wurde. Die Matrix ist in diesem Zustand lagerstabil, aber noch nicht vollständig ausreagiert und deswegen noch schmelzbar oder fließfähig. Die Viskosität ist aber deutlich höher als im Ausgangszustand.

In einem zweiten Schritt wird dann das Faser-Matrix-Halbzeug in einer Presse, die die gewünschte finale Form vorgibt, unter Temperatur- und Druckbeaufschlagung zum fertigen Composite vollständig ausgehärtet. Das Produkt dieses Aushärteschritts kann auch als Faser-Matrix-Laminat bezeichnet werden.

Bei Prepreg-Verfahren wird dabei ein faser-basiertes Halbzeug (bevorzugt ein Gelege oder Gewebe) mit einem Imprägnierharz beschichtet und anschließend in einen B-Stage überführt. Im B-Stage ist das Harz in der Regel bereits anreagiert, aber noch nicht ausreagiert. Prepregs können tacky (d. h. flexibel, klebrig) oder non-tacky (d. h. hart, steif, nicht klebrig) sein. Im zweiten Prozessschritt können die noch reaktiven Prepregs nach Bedarf zugeschnitten, gestapelt, großflächig in eine Form gelegt und ausgehärtet/geformt werden. Die Eigenschaften des resultierenden Bauteils können je nach Faserausrichtung quasi-isotrop oder anisotrop sein.

Bei SMC-Verfahren werden geschnittene Fasern mit einem Imprägnierharz beschichtet und anschließend in einen B-Stage überführt. Auch hier ist das Harz im B-Stage bereits anreagiert, aber nicht ausreagiert. Das SMC-Material ist typischerweise flexibel (lederartig) und kann leicht auf- und abgerollt werden. Im zweiten Prozessschritt wird das SMC-Material in Streifen geschnitten, gestapelt an mehrere Stellen in die Form gelegt (Belegungsgrad oft ungefähr 60%) und dann geformt/ausgehärtet. Dabei fließt das Material im Vergleich zu Prepregs relativ stark und transportiert dabei die geschnittenen Fasern mit. Die Eigenschaften des resultierenden Bauteils sind im Idealfall isotrop.

Heißhärtende SMC-Systeme auf Epoxidharzbasis sind bekannt und werden insbesondere in der Automobilindustrie eingesetzt. Hier dienen Epoxy-Systeme als Ersatz für traditionell eingesetzte UP-Harze und VE-Harze, die einerseits toxikologisch bedenkliches Styrol enthalten und andererseits schlechtere mechanische Eigenschaften besitzen als Epoxid-Systeme.

Aufgrund seines geringen Preises, der hohen Verfügbarkeit, seiner hohen Latenz und des ausgewogenen thermo-/mechanischen Eigenschaftsbildes der daraus hergestellten Faserverbundwerkstoffe wird Dicyandiamid bevorzugt und in großen Mengen als Härterkomponente in Epoxidharzformulierungen für Faser-Matrix-Halbzeuge bzw. Laminate eingesetzt.

DE 21 31 929 A1 beschreibt eingedickte Epoxidzusammensetzungen, die Reaktionsprodukte aus Epoxidharzen auf Basis von aromatischen Polyglycidylethern und Aminen sowie Dicyandiamid und tertiäre Amine enthalten. Die Zusammensetzungen können für die Beschichtung von Vliesen und Geweben eingesetzt werden. Nachteilig an den Zusammensetzungen ist, dass sie nach wenigen Tagen hart werden. Dadurch ist das typische Auf- bzw. Abrollen des Materials im B-Stage nicht möglich.

WO 98/022527 A1 offenbart Zusammensetzungen umfassend mindestens eine flüssige EpoxyVerbindung, mindestens einen Verdicker, bei dem es sich um ein Anhydrid handeln kann, und einen latenten Härter, der u.a. ein Polyamin oder Dicyandiamid sein kann. Die beschriebenen Zusammensetzungen können bei der Herstellung von SMCs Anwendung finden. Die Beschreibung offenbart zwar Härtungstemperaturen von 90 bis 250 °C und sowie Härtungszeiten von 1 bis 120 Minuten; in den Beispielen wird für den Fall, dass Dicyandiamid der Härter ist, jedoch nur eine Härtungstemperatur und -zeit von 150 °C und 1 Stunde offenbart.

WO 2014/184012 A1 offenbart insbesondere für die Herstellung von SMCs geeignete Zusammensetzungen aus Epoxidharz, einem Imidazol und einem latenten Härter, bei dem es sich um Dicyandiamid handeln kann. Die Zusammensetzungen können weiterhin tertiäre Amine wie Benzyldimethylamin aufweisen. Nachteilig an den dort beschriebenen Zusammensetzungen ist die geringe Lagerstabilität der SMC-Sheets (im B-Stage), die bei nur etwa einer Woche liegt. Weiterhin zeigen die offenbarten Zusammensetzungen einen nicht zufriedenstellenden Viskositätsaufbau. Insbesondere ist das Fließverhalten der Zusammensetzungen beim Verpressen nicht zufriedenstellend.

CN 110283425 A offenbart Zusammensetzungen aus Epoxidharz, Anhydrid und optional einem Aminhärter. Bei den Aminhärtern kann es sich um eine oder mehrere Verbindungen ausgewählt aus Dicyandiamid, Diaminodiphenylsulfon und Diaminodiphenylmethan handeln. Die beschriebenen Zusammensetzungen können nach Beschichtung eines Gewebes innerhalb weniger Minuten bei 170 bis 200 °C aushärten. Nachteilig an den beschriebenen Zusammensetzungen ist sowohl das zugesetzte Lösemittel als auch das eingesetzte Brom-haltige Epoxyharz. Weiterhin sind die Zusammensetzungen wenig reaktiv: Insbesondere für die Härtung von SMCs, die üblicherweise bei Temperaturen von 150 °C erfolgen, sind die dort offenbarten Zusammensetzungen aufgrund einer nicht zufrieden stellenden Schmelzviskosität bei 150 °C nicht geeignet.

Aufgabe der vorliegenden Erfindung ist es, die geschilderten Nachteile zu vermeiden. Insbesondere ist es die Aufgabe der vorliegenden Erfindung, Epoxidharz-Zusammensetzungen zur Verfügung zu stellen, die zur Herstellung lang lagerbarer und gut auf- und abwickelbarer Halbzeuge im B-Stage (idealerweise aufweisend nicht vollständig ausgehärtete Harzkomponenten mit einem T_{g} von < 20 °C über mehrere Wochen) eingesetzt werden können und bereits bei relativ niedrigen Härtungstemperaturen in kurzer Zeit (idealerweise 5 Minuten bei 150 °C) aushärten. Weiterhin sollen die Zusammensetzungen eine niedrige Anfangsmischviskosität (bevorzugt nicht mehr als 10 Pa*s bei Temperaturen von 23 bis 30 °C, insbesondere bei 30 °C) aufweisen, um eine gute Faserimprägnierung zu gewährleisten. Weiter soll die vorliegende Erfindung auch für die Verwendung mit nicht halogenierten Epoxidharzen einsetzbar sein.

Die sich vorliegend stellende Aufgabe wird gelöst durch die erfindungsgemäße Zusammensetzung umfassend
A) 75 - 95 Gew.-% mindestens einer Epoxidverbindung,
B) 3 - 22 Gew.-% einer Härterzusammensetzung bestehend aus
   B1) mindestens einer Verbindung mit mindestens zwei mit Epoxidgruppen der Komponente A) reaktiven Wasserstoffatomen und
   B2) Dicyandiamid,
C) 0,2 - 4 Gew.-% mindestens eines Anhydrids und
D) 0,1 - 5 Gew.-% mindestens eines Härtungsbeschleunigers,
wobei sich die Gew.-%-Angaben beziehen auf die Summe der Komponenten A) bis D).

Die erfindungsgemäße Zusammensetzung hat den Vorteil, dass sie eine besonders niedrige Anfangsviskosität bei 23 - 30 °C aufweist und dass sie bei Temperaturen zwischen 23 und 150 °C, bevorzugt zwischen 23 und 120 °C, besonders bevorzugt zwischen 50 und 80 °C, in einen B-Stage überführt werden kann, bei dem ein Umsatz- und Viskositätsplateau erreicht wird. Die Matrix aus der Epoxidharz-Zusammensetzung und das Composite sind in diesem Zustand lagerstabil und noch nicht vollständig ausreagiert, schmelzbar bzw. fließfähig. Die Viskosität ist aber deutlich höher als im Ausgangszustand.

### Epoxidverbindung A)

Komponente A) ist mindestens eine Epoxidverbindung. Geeignete Epoxidverbindungen werden z. B. in EP 675 185 A2 beschrieben. Es kommt eine Vielzahl der hierfür bekannten Verbindungen in Betracht, die mehr als eine Epoxidgruppe, vorzugsweise zwei Epoxidgruppen, pro Molekül enthalten. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen und ähnliche.

Vorzugsweise handelt es sich dabei um Glycidylether, die sich von mehrwertigen Phenolen, insbesondere Bisphenolen sowie Novolaken ableiten und deren Molmassen bezogen auf die Anzahl der Epoxidgruppen ME ("Epoxidäquivalentgewichte", "EV-Wert") zwischen 100 und 1500, insbesondere jedoch zwischen 150 und 250 g/val, liegen.

Bevorzugte mehrwertige Phenole sind: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan,4,4'-Dihydroxydiphenyl,4,4'-Dihydroxybenzophenon, Bis-(4-hydroxyphenyl)-1,1-äthan, Bis-(4-hydroxyphenyl)-1,1-isobutan, 2,2-Bis-(4-hydroxy-tert-butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-ether, Bis-(4-hydroxyphenyl)-sulfon sowie die Chlorierungs- und Bromierungsprodukte der vorstehend genannten Verbindungen wie beispielsweise Tetrabrom-Bisphenol A.

Bevorzugt sind die Epoxidverbindungen A) nicht halogeniert.

Ganz besonders bevorzugt, werden Diglycidylether auf Basis von Bisphenol A und Bisphenol F mit einem Epoxidäquivalentgewicht von 150 bis 200 g/val eingesetzt. Diese sind bevorzugt bei 25 °C und 1013,25 hPa flüssig.

Es können auch Polyglycidylether von Polyalkoholen verwendet werden, wie z. B. Ethandiol-1,2-diglycidylether, Propandiol-1,2-diglycidylether, Propandiol-1,3-diglycidylether, Butandioldiglycidylether, Pentandioldiglycidylether (= Neopentylglykoldiglycidylether), Hexandioldiglycidylether, Diethylenglykoldiglycidylether, Dipropylenglykoldiglycidylether, höhere Polyoxyalkylenglykoldiglycidylether, wie z. B. höhere Polyoxyethylenglykoldiglycidylether und Polyoxypropylenglykoldiglycidylether, Mischpolyoxyethylen-propylenglykoldiglycidylether, Polyoxytetramethylenglykoldiglycidylether, Polyglycidylether des Glycerins, des 1,2,6-Hexantriols, Trimethylolpropans, Trimethylolethans, Pentaerythrits, Sorbitols, Polyglycidylether von oxalkylierten Polyolen (wie z. B. des Glycerins, Trimethylolpropans, Pentaerythrits u. a.), Diglydicylether des Cyclohexandimethanols, Bis-(4-hydroxycyclohexyl)methans und 2,2-Bis-(4-hydroxycyclohexyl)-propans, Polyglycidylether des Rizinusöls, Triglycidyltris-(2-hydroxy-ethyl)-isocyanurat.

Weiterhin kommen als Komponente A) in Frage: Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.

Weiterhin seien genannt Glycidylester ungesättigter Carbonsäuren und epoxidierte Ester von ungesättigten Alkoholen bzw. ungesättigten Carbonsäuren. Zusätzlich zu den Polyglycidylethern können geringe Mengen mindestens eines Monoepoxids wie z. B. Methylglycidylether, Butylglycidylether, Allylglycidylether, Ethylhexylglycidylether, langkettige aliphatische Glycidylether, wie z. B. Cetylglycidylether und Stearylglycidylether, Monoglycidylether eines höheren isomeren Alkoholgemisches, Glycidylether einer Mischung von C12- bis C13-Alkoholen, Phenylglycidylether, Kresylglycidylether, p-t-Butylphenylglycidylethers, p-Octylphenylglycidylether, p-Phenylphenylglycidylether, Glycidylether eines oxalkylierten Laurylalkohols sowie Monoepoxide wie beispielsweise epoxidierte einfach ungesättigte Kohlenwasserstoffe (Butylen-, Cyclohexen-, Styroloxid) in Massenanteilen bis zu 30 Gew.-%, vorzugsweise 10 bis 20 Gew.-%, bezogen auf die Masse der Polyglycidylether mitverwendet werden.

Als Epoxyverbindungen kommen bevorzugt Glycidylether und Glycidylester, aliphatische Epoxide, Diglycidylether auf Basis Bisphenol A und / oder Bisphenol F und Glycidylmethacrylate in Frage. Beispiele für solche Epoxide sind auch Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname CARDURA E10, Shell), 3,4-Epoxycyclohexylmethyl-3',4'-epoxycyclohexan-carboxylat (ECC), Ethylhexylglycidylether, Butylglycidylether, Pentaerythrittetraglycidylether, (Handelsname POLYPOX R 16, UPPC AG) sowie andere Polypoxtypen mit freien Epoxygruppen.

Es können auch Mischungen der genannten Epoxyverbindungen eingesetzt werden.

Als Epoxykomponente werden besonders bevorzugt Polyepoxide auf Basis von Bisphenol A-diglycidylether, Bisphenol F-diglycidylether oder cycloaliphatische Typen eingesetzt. Vorzugsweise werden in der erfindungsgemäßen härtbaren Zusammensetzung Epoxidharze ausgewählt aus der Gruppe bestehend aus Epoxidharzen auf Basis von Bisphenol A-diglycidylether, Epoxidharzen auf Basis von Bisphenol F-diglycidylether und cycloaliphatischen Typen wie z. B. 3,4-Epoxycyclohexylepoxyethan oder 3,4-Epoxycyclohexylmethyl-3,4-epoxy-cyclohexancarboxylat, wobei Bisphenol A basierte Epoxidharze und Bisphenol F basierte Epoxidharze besonders bevorzugt sind.

Erfindungsgemäß können auch Mischungen von Epoxyverbindungen als Komponente A) eingesetzt werden.

Komponente A) wird erfindungsgemäß eingesetzt in Anteilen von 75 - 95 Gew.-%, bezogen auf die Summe aus A) bis D). Weiter bevorzugt wird A) in Anteilen von 80 - 92 Gew.-%, bezogen auf die Summe aus A) bis D) eingesetzt.

Bevorzugt wird die Menge der Komponente A) so gewählt, dass das stöchiometrische Verhältnis der Epoxid-Gruppen von A) und der Anzahl der reaktiven Wasserstoffatome von B1) und B2) zwischen 2 : 1 und 1 : 2 beträgt, bevorzugt zwischen 1,25 : 1 und 1 : 1, besonders bevorzugt zwischen 1,1 : 1 und 1:1. Dabei kann die Anzahl der reaktiven Wasserstoffatome von B1) und B2) auch als Anzahl der reaktiven Wasserstoffatome der Komponente "B)" bezeichnet werden. Für die Komponente B2) (Dicyandiamid) wird dabei eine Zahl von sieben aktiven Wasserstoffatome zugrunde gelegt. Noch weiter bevorzugt wird pro aktivem Wasserstoffatom aller Komponenten B) eine Epoxidgruppe aus A) eingesetzt.

### Härterzusammensetzung B)

Es wird eine Härterzusammensetzung bestehend aus B1) mindestens einer Verbindung mit mindestens einer gegenüber Epoxidgruppen der Komponente A) reaktiven funktionellen Gruppe und B2) Dicyandiamid eingesetzt.

### Komponente B1)

Als Verbindungen B1) sind prinzipiell solche Stoffe geeignet, die mindestens zwei mit Epoxidgruppen der Komponente A) reaktive Wasserstoffatome aufweisen. Bevorzugt weisen die Verbindungen B1) zwei bis vier mit Epoxidgruppen der Komponente A) reaktive Wasserstoffatome auf.

Bevorzugt sind die mindestens zwei reaktiven Wasserstoffatome Bestandteil identischer oder unterschiedlicher reaktiver Gruppen ausgewählt aus HO-, HS-, H₂N- und HN-Gruppen. Das heißt, bevorzugt sind die mindestens zwei mit Epoxidgruppen der Komponente A) reaktiven Wasserstoffatome Bestandteil von Hydroxy-, Thiol- oder primären oder sekundären Aminogruppen. Dabei weisen Hydroxy-, Thiol- und sekundäre Aminogruppen jeweils ein reaktives Wasserstoffatom auf und primäre Aminogruppen zwei reaktive Wasserstoffatome. Weiter bevorzugt sind die reaktiven Wasserstoffatome Bestandteil mindestens zweier identischer reaktiver Gruppen ausgewählt aus HO-, HS- H₂N- und NH-Gruppen.

Weiter bevorzugt einsetzbare Verbindungen B1) sind Amine, Aminoalkohole und Mercaptane.

Besonders bevorzugt sind die mit Epoxidgruppen reaktiven funktionellen Gruppen ausgewählt aus H₂N- und HN-Gruppen.

Noch weiter bevorzugt handelt es sich bei entsprechenden Verbindungen B1) um mindestens ein Diamin oder Polyamin. Hier und im Folgenden sind unter Polyaminen dabei Amine mit in Summe mindestens drei primären und sekundären Aminogruppen zu verstehen.

Bevorzugt werden B1) mindestens zwei Verbindungen mit mindestens einer gegenüber Epoxidgruppen der Komponente A) reaktiven funktionellen Gruppe eingesetzt. Bevorzugt enthalten die mindestens zwei Verbindungen B1) mindestens zwei reaktive Gruppen ausgewählt aus HO-, H₂N-, HN- und HS-Gruppen. Noch weiter bevorzugt werden mindestens zwei Di- oder Polyamine eingesetzt.

Besonders bevorzugt wird mindestens ein Diamin oder Polyamin als Komponente B1) eingesetzt. Di- oder Polyamine B1) sind in der Literatur bekannt. Diese können monomere, oligomere und/oder polymere Verbindungen sein. Bevorzugte monomere und oligomere Verbindungen können bevorzugt ausgewählt werden aus der Gruppe bestehend aus Diaminen, Triaminen und Tetraminen. Die Amingruppe der Di- oder Polyamine B1) kann an ein primäres, sekundäres oder tertiäres Kohlenstoffatom angebunden sein, bevorzugt an einem primäres oder sekundäres Kohlenstoffatom. Es können auch Mischungen von Di- und/oder Polyaminen als Komponente B1) eingesetzt werden.

Als mindestens eine Verbindung B1) kann bevorzugt mindestens eine der folgenden Verbindungsklassen mit reaktiven Gruppen ausgewählt aus H₂N- und HN-Gruppen eingesetzt werden:
- aliphatische Amine, weiter bevorzugt Polyalkylenpolyamine, insbesondere 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, Diethylentriamin, Triethylentetramin, Tetraethylenpentamin, Pentaethylenhexamin, 2,2,4-Trimethylhexamethylendiamin, 2,4,4-Trimethylhexamethylendiamin, 2-Methyl-pentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), und Dipropylentriamin;
- Oxyalkylenpolyamine, weiter bevorzugt ausgewählt aus Polyoxypropylendiamin und Polyoxypropylentriamin (z. B. Jeffamine^{®} D-230, Jeffamine^{®} D-400, Jeffamine^{®} T-403, Jeffamine^{®} T-5000), 1,13-Diamino-4,7,10-trioxatridecan, 4,7-Dioxadecan-1,10-diamin, 3,3'-Oxybis(ethylenoxy)bis(propylamin);
- cycloaliphatische Amine, weiter bevorzugt ausgewählt aus Isophorondiamin (=3,5,5-Trimethyl-3-aminomethyl-cyclohexylamin), 4,4'-Diaminodicyclohexylmethan, 2,4'-Diaminodicyclohexylmethan und 2,2'-Diaminodicyclohexylmethan allein oder in Mischungen der Isomeren, 3,3'-Dimethyl-4,4'-diamino-dicyclohexylmethan, N-Cyclohexyl-1,3-propandiamin, 1,2-Diaminocyclohexan, 3-(Cyclohexylamino)propylamin, Piperazin, N-Aminoethylpiperazin, TCD-Diamin (3(4), 8(9)-Bis(aminomethyl)-tricyclo[5.2.1.0^{2,6}]decan), 4-Methylcyclohexan-1,3-diamin, Cyclohexan-1,3-diamin, Triacetondiamin;
- aromatische Amine, weiter bevorzugt ausgewählt aus Xylylendiaminen, Phenylendiaminen, 1,3-Phenylendiamin, 1,4-Phenylendiamin, 4,4'-Diaminodiphenylsulfon, 4,4'-Diaminodiphenylmethan, 2,4'-Diaminodiphenylmethan und 2,2'-Diaminodiphenylmethan;
- Addukthärter, das heißt die Umsetzungsprodukte von Epoxidverbindungen, insbesondere Glycidylether des Bisphenol A und F, mit überschüssigem Amin;
- Polyamidoaminhärter, die durch Kondensation von Mono- und Polycarbonsäuren mit Polyaminen erhalten werden, insbesondere durch Kondensation von Dimerfettsäuren mit Polyalkylenpolyaminen; und/oder
- Mannichbasenhärter, das heißt die durch Umsetzung von 1) Phenolen (einschließend Cardanol) oder Resorcinen mit 2) Aldehyden (insbesondere Formaldehyd), und Di- oder Polyaminen (insbesondere Xylylendiamin und Aminoethylpiperazin) über eine Mannichreaktion erhältliche Verbindungen.

Es können auch Mischungen der vorab genannten Di- oder Polyamine als Komponente B1) eingesetzt werden.

Bevorzugt werden aliphatische, cycloaliphatische, aromatische Amine und/oder Oxyalkylenpolyamine eingesetzt.

Bevorzugt können auch Aminoalkohole als Komponente B1) eingesetzt werden. Aminoalkohole können bevorzugt ausgewählt werden aus der Gruppe bestehend aus Monoethanolamin, 3-Amino-1-propanol, Isopropanolamin, Aminoethoxyethanol, N-(2-Aminoethyl)ethanolamin, N-Ethylethanolamin, N-Butylethanolamin, Diethanolamin, 3-(Hydroxyethylamino)-1-propanol Isophoronaminoalkohol und Diisopropanolamin. Aminoalkohole können allein oder als Mischungen mehrerer Aminoalkohole zusammen mit Di- und Polyaminen als Komponente B1) eingesetzt werden.

Bevorzugt können auch Mercaptane (auch Thiole genannt) als Komponente B1) eingesetzt werden. Mercaptane können bevorzugt ausgewählt werden aus der Gruppe bestehend aus Ethanthiol, Dithiothreitol, Dithioerythritol, Glyceryldithioglykolat, Glykoldimercaptoacetat, Trimethylolpropantrimercaptoacetat, Pentaerythritoltetramercaptoacetate, Glykoldi(3-mercaptopropionat), Trimethylolpropantri(3-mercaptopropionat), Pentaerythritoltetra(3-mercaptopropionat), Dipentaerythritolhexa(3-mercaptopropionat), Ethoxyliertes-Trimethylolpropan-tri(3-mercaptopropionat) (Produktname: Thiocure ETTMP 1300), Tris[2-(3-mercaptopropionyloxy)ethyl]isocyanurat. Mercaptane können allein oder als Mischungen zusammen mit Di- und Polyaminen als Komponente B1) eingesetzt werden.

Bevorzugt können auch Polyphenole als Komponente B1) eingesetzt werden. Polyphenole können allein oder als Mischungen zusammen mit Di- und Polyaminen als Komponente B1) eingesetzt werden.

Ganz besonders bevorzugt kann die Komponente B1) ausgewählt werden aus der Gruppe bestehend aus 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, Diethylentriamin, Triethylentetramin, Tetraethylenpentamin, Pentaethylenhexamin, 2,2,4-Trimethylhexamethylendiamin, 2,4,4-Trimethylhexamethylendiamin, 2-Methyl-pentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), Dipropylentriamin, Isophorondiamin (= 3,5,5-Trimethyl-3-aminomethyl-cyclohexylamin), 4,4'-Diaminodicyclohexylmethan, 2,4'-Diaminodicyclohexylmethan und 2,2'-Diaminodicyclohexylmethan (jeweils allein oder in Mischungen der Isomeren), 3,3'-Dimethyl-4,4'-diamino-dicyclohexylmethan, N-Cyclohexyl-1,3-propandiamin, 1,2-Diaminocyclohexan, 3-(Cyclohexylamino)propylamin, Piperazin, N-Aminoethylpiperazin, TCD-Diamin (= 3(4),8(9)-Bis(aminomethyl)-tricyclo[5.2.1.0^{2,6}]decan), 4-Methylcyclohexan-1,3-diamin, Cyclohexan-1,3-diamin, Triacetondiamin und Oxyalkylenpolyaminen (insbesondere Polyoxypropylendiaminen und, Polyoxypropylentriaminen, insbesondere Jeffamine^{®} D-230, Jeffamine^{®} D-400, Jeffamine^{®} T-403 oder Jeffamine^{®} T-5000).

### Komponente B2)

Bei der Härter-Komponente B2) handelt es sich um Dicyandiamid.

Die aus den einzelnen Komponenten B1) und B2) bestehende Härterzusammensetzung B) wird erfindungsgemäß eingesetzt in Anteilen von 3 - 22 Gew.-%, bezogen auf die Summe aus A) bis D). Weiter bevorzugt wird B) in Anteilen von 5-20%, besonders bevorzugt von 5-16%, bezogen auf die Summe aus A) bis D), eingesetzt.

Dabei wird die Härter-Komponente B2) bevorzugt in Mengen von 10 - 90 Gew.-%, weiter bevorzugt von 30 - 75 Gew.-%, besonders bevorzugt von 25 - 70 Gew.-% bezogen auf die Gesamtmenge aus B1) und B2), eingesetzt. Entsprechend wird die Härter-Komponente B1) bevorzugt in Mengen von 10 - 90 Gew.-%, weiter bevorzugt von 25 - 70 Gew.-%, besonders bevorzugt von 30 - 75 Gew.-% bezogen auf die Gesamtmenge aus B1) und B2) eingesetzt.

### Anhydrid C)

Erfindungsgemäß wird als Komponente C) mindestens ein Anhydrid eingesetzt. Bevorzugte Anhydride können ausgewählt werden aus der Gruppe bestehend aus Phthalsäureanhydrid, Hexahydrophthalsäureanhydrid, Methyl-1,2,3,6-Tetrahydrophthalsäureanhydrid, Hexachlor-endomethylen-1,2,3,6-Tetrahydrophthalsäureanhydrid, Methylendomethylentetrahydrophthalsäureanhydrid, Maleinsäureanhydrid, Bernsteinsäureanhydrid, Alkyenylbernsteinsäureanhydriden (insbesondere Nonenyl- oder Dodecenylbernsteinsäureanhydrid), Polysebacinsäureanhydrid, Polaacelainsäureanhydrid, Pyrromellitsäuredianhydrid und Benzophenon-3,3',4,4'-tetracarboxyl-säureanhydrid. Anhydride können allein oder als Mischungen eingesetzt werden. Bevorzugt werden Anhydride eingesetzt, die toxikologisch unbedenklich und fest bei 25°C sind.

Besonders bevorzugt sind Maleinsäureanhydrid und Hexahydrophthalsäureanhydrid.

Die Komponente C) wird in Mengen 0,2 - 4 Gew.-%, bevorzugt 0,2 - 2 Gew.-% bezogen auf die Summe der Komponenten A) bis D) eingesetzt.

### Härtungsbeschleuniger D)

Weiterhin sind Härtungsbeschleuniger als Komponente D) enthalten und werden als Katalysatoren für die Epoxy-Amin-Reaktion zugegeben. Bevorzugt unterscheiden sich diese von den Komponenten B1) und B2) der Härterzusammensetzung B) und vom Anhydrid C). Bevorzugte Beschleuniger sind organische Säuren (weiter bevorzugt ausgewählt aus der Gruppe bestehend aus Salicylsäure, Dihydroxybenzoesäure, Trihydroxybenzoesäure, Methylsalicylsäure, 2-Hydroxy-3-isopropyl-benzoesäure, Hydroxynaphthoesäuren, Milchsäure und Glycolsäure), tertiäre Amine (weiter bevorzugt ausgewählt aus der Gruppe bestehend aus Benzyldimethylamin (BDMA), 1,4-Diazabicyclo[2,2,2]octan (DABCO), Triethylamin, N,N'-Dimethylpiperazin und Aminoethylpiperazin (AEP)), Hydroxylamine (weiter bevorzugt ausgewählt aus der Gruppe bestehend aus Dimethylaminomethylphenol, Bis(dimethylaminomethyl)phenol und 2,4,6-Tris(dimethylaminomethyl)phenol (Ancamine K54)), Urone (weiter bevorzugt ausgewählt aus der Gruppe bestehend aus 3-(4-Chlorphenyl)-1,1-dimethyl-harnstoff (Monuron), 3-(3,4-Dichlorphenyl)-1,1-dimethyl-harnstoff (Diuron), 3-Phenyl-1,1-dimethyl-harnstoff (Fenuron), 3-(3-Chlor-4-methylphenyl)-1,1-dimethylharnstoff (Chlortoluron)), Tetraalkylguanidine (weiter bevorzugt N,N,N',N'-Tetramethylguanidin (TMG)), Imidazol und -derivate (weiter bevorzugt ausgewählt aus 1H-Imidazol, 1-Methylimidazol, 2-Methylimidazol, 2-Ethylimidazol, 1-Benzyl-2-methylimidazol, 2-Ethyl-4-methylimidazol, 2-Phenylimidazol, 2-Phenyl-4-methylimidazol, 1-Vinylimidazol, 1-(2-Hydroxyethyl)imidazol, 1,2-Dimethylimidazol, 1-Cyanoethylimidazol, Imidazol-Derivate, die unter dem Markennamen Curezol^{®} vertrieben werden wie Curezol^{®} 2MZ Azine,1B2MZ, 2MAOK, 2P4MZ, C17Z, und deren geeignete Salze), Phenol und -derivate (bevorzugt ausgewählt aus der Gruppe bestehend aus t-Butylphenol, Nonylphenol, Bisphenol-A oder Bisphenol-F) sowie organische oder anorganische Salze und Komplexverbindungen (weiter bevorzugt ausgewählt aus der Gruppe bestehend aus Methyltriphenylphosphoniumbromid, Calciumnitrat (Accelerator 3130), Mg-, Ca-, Zn- und Sn-Carboxylaten, -sulfonaten, -phosphonaten, -sulfaten, -tetrafluoroboraten, -nitraten und -triflaten). Besonders bevorzugt sind Imidazol und die o.g. Imidazol-Derivate. Besonders bevorzugt werden Imidazol und deren Derivate eingesetzt, die bei 25°C fest sind.

Erfindungsgemäß wird ein Anteil der Komponente D) von 0,1 - 5 Gew.-%, bezogen auf die Summe der Komponenten A) bis D) eingesetzt. Bevorzugt beträgt der Anteil der Komponente D) 0,5 - 5 Gew.-%, besonders bevorzugt 0,5 - 2 Gew.-%, bezogen auf die Summe der Komponenten A) bis D).

### Zusatzstoffe E)

Die erfindungsgemäße Zusammensetzung kann weiterhin Zusatzstoffe E) enthalten. Unter Zusatzstoffen werden Stoffe verstanden, die in der Regel zugesetzt werden, um die Eigenschaften der Epoxidzusammensetzung in gewünschter Richtung zu verändern, z. B. Viskosität, Benetzungsverhalten, Stabilität, Reaktionsgeschwindigkeit, Blasenbildung, Lagerfähigkeit oder Haftung, und auch Gebrauchseigenschaften dem Anwendungszweck anzupassen. Geeignete Zusatzstoffe werden z. B. in WO 99/55772, S. 15 - 25 beschrieben. Diese können zum Beispiel der Komponente A) oder B) zugegeben werden.

So können beispielsweise Lichtschutzmittel wie z. B. sterisch gehinderte Amine, oder andere Hilfsmittel, wie sie z. B. in EP 0 669 353 beschrieben wurden, in einer Gesamtmenge von 0,05 bis 5 Gew.-% bezogen auf die Summe aus A), B), C) und D) zugesetzt werden.

Füllstoffe und Pigmente wie z. B. Calciumcarbonat oder Titandioxid oder organische Farbstoffe können in einer Menge von bis zu 250 Gew.-% bezogen auf die Summe aus A), B), C) und D) zugesetzt werden.

Für die Herstellung der erfindungsgemäßen reaktiven Zusammensetzungen können darüber hinaus Zusatzstoffe wie Verlaufsmittel, z. B. Polysilicone oder Haftvermittler, z. B. auf Acrylatbasis, zugesetzt werden. Zusätzlich können noch weitere Komponenten optional enthalten sein.

Als Hilfs- und Zusatzstoffe können zusätzlich Regler, Weichmacher, Stabilisatoren und/oder Inhibitoren eingesetzt werden.

Darüber hinaus können Farbstoffe, nanoskalige Füllstoffe, Toughener (Zähigkeitsverbesserer), Trennmittel, Flammschutzmittel, Pigmente, Trockenmittel, Netz-, Dispergier- und Verlaufshilfsmittel, Lösemittel, Haftvermittler, UV-Stabilisatoren, Entschäumer und Rheologieadditive zugesetzt werden.

Weiterhin können den Epoxidharz-Zusammensetzungen thermoplastische Harze zugegeben werden, um mechanische Eigenschaften insbesondere mit Bezug auf Zähigkeit, Schwindung und Schrumpf zu verbessern. Der Literatur offenbart bereits eine Vielzahl thermoplastischer Harze, insbesondere Polyester, Polymethylmethacrylat, Polyniylbutyral, Polyvinylacetal, Polyvinylformal, Polyvinylpyrrolidon, Polycarbonat und Polyamid.

Gegenstand der vorliegenden Erfindung ist auch ein Verfahren zur Herstellung einer erfindungsgemäßen Zusammensetzung, bei dem mindestens eine Epoxidverbindung A), die Härterzusammensetzung B), mindestens ein Anhydrid C) und mindestens ein Härtungsbeschleuniger D) miteinander vermischt werden.

In einer bevorzugten Ausführungsform wird zunächst die Härterkomponente B2) in der Komponente A) dispergiert. Anschließend werden die Komponenten C) und D) in die Mischung eingerührt bzw. dispergiert. Zuletzt wird die Härterkomponente B1) eingerührt. Das kann bevorzugt durch Erwärmen auf 30 - 80 °C, bevorzugt auf 30 - 40 °C, unterstützt werden. Nachfolgend werden gegebenenfalls noch etwaige weitere Bestandteile zugemischt und dispergiert. Gegenstand der Erfindung ist auch die Verwendung einer erfindungsgemäßen Zusammensetzung zur Herstellung von Halbzeugen im B-Stage und lagerstabilen Composites. Bevorzugt kann die erfindungsgemäße Zusammensetzung zur Herstellung von Faserverbundwerkstoffen umfassend mindestens einen faserförmigen Träger und mindestens eine Kunststoff- oder Harzmatrix verwendet werden. Ebenfalls bevorzugt wird die erfindungsgemäße Zusammensetzung zur Herstellung lagerstabiler Prepregs und lagerstabiler SMCs eingesetzt.

### Faserförmige Träger

Das faserförmige Trägermaterial der Composites besteht vorzugsweise im Wesentlichen aus Glas, Kohlenstoff, Kunststoffen (insbesondere Polyamid (Aramid) und Polyester), Naturfasern, mineralischen Fasermaterialien (insbesondere Basaltfasern und keramischen Fasern). Dabei kann das faserförmige Trägermaterial aus einem einzelnen o.g. Material oder mehreren Materialien bestehen. Besteht es aus mehreren Materialien, kann das Fasermaterial aus einer Mischung mindestens zweier der o.g. Materialien bestehen oder aus mindestens zwei unterschiedlichen Lagen faserförmiger Materialien aus jeweils mindestens einer der o.g. Materialien.

Die faserförmigen Träger können als textile Flächengebilde aus Vlies, Maschenware, Gewirke oder Gestricke, nicht maschige Gebinde wie Gewebe, Gelege oder Geflechte, als Langfaser- oder Kurzfasermaterialien, jeweils einzeln oder aus mehreren Lagen verschiedener Typen, vorliegen.

Bevorzugt werden Glasfasern verwendet. Dabei sind alle Arten von glasbasierten Verstärkungsfasern einsetzbar: E-Glas-, S-Glas-, R-Glas-, M-Glas-, C-Glas-, ECR-Glas-, D-Glas-, AR-Glas-, oder Hohlglasfasern.

Kohlenstofffasern können bevorzugt zur Erzeugung von Hochleistungsverbundstoffen eingesetzt werden, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung.

Als Naturfasern können prinzipiell alle Textilfasern und Faserwerkstoffe eingesetzt werden, die aus pflanzlichem und tierischem Material gewonnen werden, insbesondere Holz-, Zellulose-, Baumwoll-, Hanf-, Jute-, Leinen-, Sisal- und Bambusfasern.

Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser-Verbundwerkstoffen deutlich geringer. Bekannte Markennamen für Aramidfasern sind Nomex^{®} und Kevlar^{®} von DuPont, oder Teijinconex^{®}, Twaron^{®} und Technora^{®} von Teijin. Besonders geeignet und bevorzugt sind Träger aus Glasfasern, Kohlenstofffasern, Aramidfasern oder keramischen Fasern.

Gegenstand der vorliegenden Erfindung ist auch ein Verfahren zur Herstellung eines Halbzeuges im B-Stage, bei dem ein faserförmiges Material mit einer erfindungsgemäßen Zusammensetzung imprägniert und anschließend in einen B-Stage überführt wird.

Bevorzugte faserförmige Materialien sind die zuvor genannten. Unter einem B-Stage versteht der Fachmann einen Zustand, in dem die reaktiven Komponenten nur teilweise miteinander reagiert haben, bis ein Umsatz- und Viskositätsplateau erreicht wurde. Bevorzugt kann dies mit den erfindungsgemäßen Zusammensetzungen durch Erwärmen auf Temperaturen zwischen 23 und 200 °C, weiter bevorzugt auf Temperaturen zwischen 23 und 120 °C, erzielt werden. Im Anschluss wird das Halbzeug im B-Stage bevorzugt abgewickelt oder ablegt.

Die resultierenden erfindungsgemäßem Halbzeuge im B-Stage sind zusammen mit den nur partiell reagierten erfindungsgemäßen Zusammensetzungen für mehrere Wochen lagerstabil.

Gegenstand der vorliegenden Erfindung ist weiterhin ein zweistufiges Verfahren zur Herstellung eines Composites (bevorzugt eines SMC-Composites oder eines Prepregs), bei dem 1) ein faserförmiges Material mit einer erfindungsgemäßen Zusammensetzung imprägniert und anschließend in ein Halbzeug im B-Stage überführt wird. Bevorzugt kann dies mit den erfindungsgemäßen Zusammensetzungen durch Erwärmen (bevorzugt mittels Wärmekammer oder IR-Strahlung) auf Temperaturen zwischen 23 und 200 °C, weiter bevorzugt zwischen 23 und 120 °C, besonders bevorzugt zwischen 50 und 80 °C, erzielt werden. Im Anschluss wird das Halbzeug im B-Stage bevorzugt abgewickelt oder ablegt. Bevorzugt wird es für einen Zeitraum von bis zu mehreren Wochen gelagert. Zeitlich nachfolgend wird dann 2) das Halbzeug im B-Stage in einer Presse unter Temperatur- und Druckbeaufschlagung vollständig zum fertigen Composite ausgehärtet. Bevorzugte Härtungstemperaturen liegen zwischen 120 und 200 °C. Weiter bevorzugt wird das Halbzeug im B-Stage bei Temperaturen zwischen 120 und 160 °C, ganz besonders bevorzugt zwischen 140 °C und 155 °C ausgehärtet. Bevorzugte Pressdrücke liegen zwischen 1 und 120 bar, weiter bevorzugt bei 20 bis 80 bar. Die Härtungszeiten betragen bevorzugt 1 - 15 Minuten, bevorzugt 2 - 10 Minuten. Im Anschluss kann das fertige Composite abgewickelt oder abgelegt werden.

Im Folgenden wird ein bevorzugtes zweistufiges Verfahren beschrieben, das zur Herstellung von SMC-Composites geeignet ist: 1) Die erfindungsgemäße Zusammensetzung wird in zwei Kastenrakel gegossen und auf zwei Trägerfolien verteilt. Anschließend wird eine Folie mit geschnittenen Fasern bestückt. Dann wird die zweite Trägerfolie mit dem Epoxidsystem auf die erste Folie gelegt. Der Schichtaufbau aus Epoxid und Fasern wird mit Hilfe von Walzen gut vermischt. Nach dem Durchmischen kann es gegebenenfalls zu einer thermisch initiierten Eindickung der Zusammensetzung kommen, indem das Faser-Matrix-Halbzeug z. B. durch eine Wärmekammer oder unter einer Infrarotlampe entlangfährt. Erhitzen auf bevorzugte Temperaturen von 30 - 150 °C, bevorzugt 30 - 120 °C, führt zu einer Vorreaktion, infolge derer die Viskosität ansteigt. Bei Verlassen z. B. der Wärmekammer oder des Bereichs der Infrarotlampe kühlt das Faser-Matrix-Halbzeug ab. Schließlich wird das Faser-Matrix-Halbzeug (SMC-Sheet) aufgewickelt. Dabei ist das Halbzeug bei -20 °C bis 30 °C für mehrere Monate lagerstabil. Nach der beschriebenen Vorreaktion in einer Wärmekammer oder unter einer Infrarotlampe oder nach einer Reifezeit ist die Viskosität so angestiegen, dass beim anschließenden Verpressen bei z. B. 150 °C die Matrix infolge einer ausreichend hohen Viskosität die Faser mittransportiert. 2) Die Herstellung der ausgehärteten SMC-Composites, also von Faserverbundbauteilen, kann wie folgt durchgeführt werden: Das lagerstabile, eingedickte SMC-Sheet wird in kleine Streifen geschnitten und in das Presswerkzeug gelegt. Dann wird die Presse zugefahren und die Sheets werden verpresst. Bevorzugte Härtungstemperaturen liegen zwischen 120 °C und 180 °C, bevorzugt zwischen 120 und 160 °C, besonders bevorzugt zwischen 140 und 150 °C. Härtungszeiten liegen zwischen 1 und 15 min, bevorzugt zwischen 2 und 10 min. Der Pressdruck liegt bei 20 - 120 bar, bevorzugt bei 20 - 80 bar.

Im Folgenden wird weiterhin die bevorzugte Herstellung eines Prepregs beschrieben: Sie erfolgt in einer dafür vorgesehenen Faser-Imprägnieranlage. 1) Zunächst wird das Gemisch in eine Harzwanne innerhalb der Imprägnieranlage gegossen. Das Fasermaterial wird durch die Harzwanne geführt, mit dem Gemisch imprägniert und passiert anschließend zwei Quetschwalzen. An den Quetschwalzen wird überschüssiges Harzmaterial abgequetscht. So wird der Faservolumenanteil der Halbzeuge reguliert. Anschließend wird das Harzmaterial erhitzt (z. B. durch einen beheizten Ofen geführt), sodass einerseits gegebenenfalls vorhandenes Lösemittel entfernt wird und andererseits ausschließlich eine Vorreaktion abläuft. Die Wärme führt bei Temperaturen von 50 - 200 °C, bevorzugt 80 - 160 °C, noch weiter bevorzugt 80 - 135 °C zu einer Vorreaktion und ggf. zum Entweichen von Lösemittel aus dem Faser-Matrix-Halbzeug, infolgedessen steigt die Viskosität an. Bei Verlassen z. B. des Ofens kühlt das Faser-Matrix-Halbzeug ab. Schließlich wird das Faser-Matrix-Halbzeug aufgewickelt. Dabei ist das Halbzeug bei -20 - 30 °C für mehrere Wochen lagerstabil. 2) Die Herstellung von ausgehärteten Composites kann wie folgt durchgeführt werden: Das lagerstabile, eingedickte Prepreg wird passend zur Pressform zugeschnitten und in das Presswerkzeug gelegt. Dann wird die Presse zugefahren und die Prepregs werden verpresst. Geeignete Härtungstemperaturen liegen zwischen 120 °C und 200 °C, bevorzugt 120 und 180 °C, besonders bevorzugt 140 °C und 160 °C. Härtungszeiten liegen bevorzugt zwischen 1 und 60 min, weiter bevorzugt zwischen 1 und 20 min, besonders bevorzugt zwischen 2 und 10 min. Der Pressdruck liegt bei 1 - 120 bar, bevorzugt bei 10 - 80 bar.

Die mit den erfindungsgemäßen Zusammensetzungen herstellbaren Composites, insbesondere Prepregs und SMC-Composites, weisen bei Raumtemperatur eine sehr hohe Lagerstabilität auf. Diese beträgt je nach enthaltener reaktiver Epoxid-Zusammensetzung und Katalyse üblicherweise zwei Wochen bei Raumtemperatur oder mehr. In der Regel sind die Prepregs jedoch mehrere Wochen oder sogar Monate bei Raumtemperatur und darunter lagerstabil. Die so hergestellten Prepregs sind meist nicht klebrig und daher sehr gut zu handhaben und weiter zu verarbeiten. Die erfindungsgemäß eingesetzten reaktiven Zusammensetzungen weisen demnach eine sehr gute Haftung und Verteilung auf dem Faser-förmigen Träger auf.

Die mit den erfindungsgemäßen Zusammensetzungen herstellbaren Composites finden bevorzugt Anwendung im Boots- und Schiffbau, in der Luft- und Raumfahrtechnik, für Zweiräder, bevorzugt Motorräder und Fahrräder, Construction, Medizintechnik, Sport, Energieerzeugungsanlagen, für Rotorblätter von Windkraftanlagen, bevorzugt im Bereich Automotive, im Bereich Batterie-Gehäuse, im Bereich Pressure Vessels und in der Elektro- und Elektronikindustrie.

Gegenstand der vorliegenden Erfindung ist auch eine Härterzusammensetzung bestehend aus B1) mindestens einer Verbindung mit mindestens zwei mit Epoxidgruppen der Komponente A) reaktiven Wasserstoffatomen und B2) Dicyandiamid, wobei B2) in Mengen von 10 - 90 Gew.-%, bezogen auf die Gesamtmenge aus B1) und B2), vorliegt.

### Komponente B1)

Als Verbindungen B1) sind prinzipiell solche Stoffe geeignet, die mindestens zwei mit Epoxidgruppen der Komponente A) reaktive Wasserstoffatome aufweisen. Bevorzugt weisen die Verbindungen B1) zwei bis vier mit Epoxidgruppen der Komponente A) reaktive Wasserstoffatome auf.

Bevorzugt sind die reaktiven Wasserstoffatome Bestandteil identischer oder unterschiedlicher reaktiver Gruppen ausgewählt aus HO-, HS-, H₂N- und HN-Gruppen. Das heißt, bevorzugt sind die mindestens zwei mit Epoxidgruppen der Komponente A) reaktiven Wasserstoffatome Bestandteil von Hydroxy-, Thiol- oder primären oder sekundären Aminogruppen. Weiter bevorzugt sind die reaktiven Wasserstoffatome Bestandteil mindestens zweier identischer reaktiver Gruppen ausgewählt aus HO-, HS- H₂N- und HN-Gruppen.

Weiter bevorzugt einsetzbare Verbindungen B1) sind Amine, Aminoalkohole und Mercaptane.

Besonders bevorzugt sind die mit Epoxidgruppen reaktiven funktionellen Gruppen ausgewählt aus H₂N- und HN-Gruppen.

Noch weiter bevorzugt handelt es sich bei entsprechenden Verbindungen B1) um mindestens ein Diamin oder Polyamin. Hier und im Folgenden sind unter Polyaminen dabei Amine mit in Summe mindestens drei primären und sekundären Aminogruppen zu verstehen.

Bevorzugt werden B1) mindestens zwei Verbindungen mit mindestens einer gegenüber Epoxidgruppen der Komponente A) reaktiven funktionellen Gruppe eingesetzt. Bevorzugt enthalten die mindestens zwei Verbindungen B1) mindestens zwei reaktive Gruppen ausgewählt aus HO-, H₂N-, HN- und HS-Gruppen. Noch weiter bevorzugt werden mindestens zwei Di- oder Polyamine eingesetzt.

Besonders bevorzugt werden mindestens ein Diamin oder Polyamin als Komponente B1) eingesetzt. Di- oder Polyamine B1) sind in der Literatur bekannt. Diese können monomere, oligomere und/oder polymere Verbindungen sein. Bevorzugte monomere und oligomere Verbindungen können bevorzugt ausgewählt werden aus der Gruppe bestehend aus Diaminen, Triaminen und Tetraminen. Die Amingruppe der Di- oder Polyamine B1) kann an ein primäres, sekundäres oder tertiäres Kohlenstoffatom angebunden sein, bevorzugt an einem primäres oder sekundäres Kohlenstoffatom. Es können auch Mischungen von Di- und/oder Polyaminen als Komponente B1) eingesetzt werden.

Als mindestens eine Verbindung B1) kann bevorzugt mindestens eine der folgenden Verbindungsklassen mit reaktiven Gruppen ausgewählt aus H₂N- und HN-Gruppen eingesetzt werden:
- aliphatische Amine, weiter bevorzugt Polyalkylenpolyamine, noch bevorzugt ausgewählt aus 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin Diethylentriamin,Triethylentetramin, Tetraethylenpentamin, Pentaethylenhexamin, 2,2,4-Trimethylhexamethylendiamin, 2,4,4-Trimethylhexamethylendiamin, 2-Methyl-pentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), und Dipropylentriamin;
- Oxyalkylenpolyamine, weiter bevorzugt ausgewählt aus Polyoxypropylendiamin und Polyoxypropylentriamin (z. B. Jeffamine^{®} D-230, Jeffamine^{®} D-400, Jeffamine^{®} T-403, Jeffamine^{®} T-5000), 1,13-Diamino-4,7,10-trioxatridecan, 4,7-Dioxadecan-1,10-diamin, 3,3'-Oxybis(ethylenoxy)bis(propylamin);
- cycloaliphatische Amine, weiter bevorzugt ausgewählt aus Isophorondiamin (=3,5,5-Trimethyl-3-aminomethyl-cyclohexylamin), 4,4'-Diaminodicyclohexylmethan, 2,4'-Diaminodicyclohexylmethan und 2,2'-Diaminodicyclohexylmethan allein oder in Mischungen der Isomeren, 3,3'-Dimethyl-4,4'-diamino-dicyclohexylmethan, N-Cyclohexyl-1,3-propandiamin, 1,2-Diaminocyclohexan, 3-(Cyclohexylamino)propylamin, Piperazin, N-Aminoethylpiperazin, TCD-Diamin (3(4), 8(9)-Bis(aminomethyl)-tricyclo[5.2.1.0^{2,6}]decan), 4-Methylcyclohexan-1,3-diamin, Cyclohexan-1,3-diamin, Triacetondiamin;
- aromatische Amine, weiter bevorzugt ausgewählt aus Xylylendiaminen, Phenylendiaminen, 1,3-Phenylendiamin, 1,4-Phenylendiamin, 4,4'-Diaminodiphenylsulfon, 4,4'-Diaminodiphenylmethan, 2,4'-Diaminodiphenylmethan und 2,2'-Diaminodiphenylmethan;
- Addukthärter, das heißt die Umsetzungsprodukte von Epoxidverbindungen, insbesondere Glycidylether des Bisphenol A und F, mit überschüssigem Amin;
- Polyamidoaminhärter, die durch Kondensation von Mono- und Polycarbonsäuren mit Polyaminen erhalten werden, insbesondere durch Kondensation von Dimerfettsäuren mit Polyalkylenpolyaminen; und/oder
- Mannichbasenhärter, das heißt die durch Umsetzung von 1) Phenolen (einschließend Cardanol) oder Resorcinen mit 2) Aldehyden (insbesondere Formaldehyd), und Di- oder Polyaminen (insbesondere Xylylendiamin und Aminoethylpiperazin) über eine Mannichreaktion erhältliche Verbindungen.

Es können auch Mischungen der vorab genannten Di- oder Polyamine als Komponente B1) eingesetzt werden.

Bevorzugt werden aliphatische, cycloaliphatische, aromatische Amine und/oder Oxyalkylenpolyamine eingesetzt.

Bevorzugt können auch Aminoalkohole als Komponente B1) eingesetzt werden. Aminoalkohole können bevorzugt ausgewählt werden aus der Gruppe bestehend aus Monoethanolamin, 3-Amino-1-propanol, Isopropanolamin, Aminoethoxyethanol, N-(2-Aminoethyl)ethanolamin, N-Ethylethanolamin, N-Butylethanolamin, Diethanolamin, 3-(Hydroxyethylamino)-1-propanol Isophoronaminoalkohol und Diisopropanolamin. Aminoalkohole können allein oder als Mischungen mehrerer Aminoalkohole zusammen mit Di- und Polyaminen als Komponente B2) eingesetzt werden.

Bevorzugt können auch Mercaptane (auch Thiole genannt) als Komponente B1) eingesetzt werden. Mercaptane können bevorzugt ausgewählt werden aus der Gruppe bestehend aus Ethanthiol, Dithiothreitol, Dithioerythritol, Glyceryldithioglykolat, Glykoldimercaptoacetat, Trimethylolpropantrimercaptoacetat, Pentaerythritoltetramercaptoacetate, Glykoldi(3-mercapto-propionat), Trimethylolpropantri(3-mercaptopropionat), Pentaerythritoltetra(3-mercaptopropionat), Dipentaerythritolhexa(3-mercaptopropionat), Ethoxyliertes-Trimethylolpropan-tri(3-mercapto-propionat) (Produktname: Thiocure ETTMP 1300), Tris[2-(3-mercaptopropionyloxy)ethyl]-isocyanurat. Mercaptane können allein oder als Mischungen zusammen mit Di- und Polyaminen als Komponente B1) eingesetzt werden.

Bevorzugt können auch Polyphenole als Komponente B1) eingesetzt werden. Polyphenole können allein oder als Mischungen zusammen mit Di- und Polyaminen als Komponente B1) eingesetzt werden.

Ganz besonders bevorzugt kann die Komponente B1) ausgewählt werden aus der Gruppe bestehend aus 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, Diethylentriamin, Triethylentetramin, Tetraethylenpentamin, Pentaethylenhexamin, 2,2,4-Trimethylhexamethylendiamin, 2,4,4-Trimethylhexamethylendiamin, 2-Methyl-pentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), Dipropylentriamin, Isophorondiamin (= 3,5,5-Trimethyl-3-aminomethyl-cyclohexylamin), 4,4'-Diaminodicyclohexylmethan, 2,4'-Diaminodicyclohexylmethan und 2,2'-Diaminodicyclohexylmethan (jeweils allein oder in Mischungen der Isomeren), 3,3'-Dimethyl-4,4'-diamino-dicyclohexylmethan, N-Cyclohexyl-1,3-propandiamin, 1,2-Diaminocyclohexan, 3-(Cyclohexylamino)propylamin, Piperazin, N-Aminoethylpiperazin, TCD-Diamin (= 3(4),8(9)-Bis(aminomethyl)-tricyclo[5.2.1.0^{2,6}]decan), 4-Methylcyclohexan-1,3-diamin, Cyclohexan-1,3-diamin, Triacetondiamin und Oxyalkylenpolyaminen (insbesondere Polyoxypropylendiaminen und, Polyoxypropylentriaminen, insbesondere Jeffamine^{®} D-230, Jeffamine^{®} D-400, Jeffamine^{®} T-403 oder Jeffamine^{®} T-5000).

### Komponente B2)

Bei der Härter-Komponente B2) handelt es sich um Dicyandiamid.

Die Härter-Komponente B2) wird bevorzugt in Mengen von 30 - 75 Gew.-%, besonders bevorzugt von 25 - 70 Gew.-%, bezogen auf die Gesamtmenge aus B1) und B2), eingesetzt. Entsprechend wird die Härter-Komponente B1) bevorzugt in Mengen von 25 - 70 Gew.-%, besonders bevorzugt von 30 - 75 Gew.-%, bezogen auf die Gesamtmenge aus B1) und B2), eingesetzt.

### Beispiele

Die in den folgenden Beispielen genutzten Einsatzstoffe fasst Tabelle 1 zusammen.

**Tab. 1.: Einsatzstoffe**

| Handelsname | Lieferant | Chemische Bezeichnung | Abkürzung |
|---|---|---|---|
| Triacetondiamin | Evonik Operations | 2,2,6,6-Tetramethyl-4-amino-piperidin | TAD |
| VESTAMIN^{®} IPD | Evonik Operations | 3-Aminomethyl-3,5,5-trimethylcyclohexylamin | IPD |
| Amicure CG-1400F | Evonik Operations | Dicyandiamid | DICY |
| Ancamine^{®} TETA | Evonik Operations | Triethylentetramin | TETA |
| Jeffamine^{®} D230 | Huntsman | Polyoxypropylendiamin | - |
| Diaminodiphenylsulfon | Sigma-Aldrich | Diaminodiphenylsulfon | DDS |
| Maleinsäureanhydrid | Sigma-Aldrich | Maleinsäureanhydrid | MSA |
| Hexahydrophthalsäureanhydrid | Sigma-Aldrich | Hexahydrophthalsäureanhydrid | HHPTA |
| Epikote^{®} 828 | Hexion | Epoxidharz aus Bisphenol A und Epichlorhydrin | DGEBA |
| Epikote^{®} 827 | Hexion | Epoxidharz aus Bisphenol A und Epichlorhydrin | DGEBA |
| Epikote 862 | Hexion | Epoxidharz aus Bisphenol F und Epichlorhydrin | DGEBF |
| Araldite DY-D | Huntsman | Butandioldiglycidylether | BDDGE |
| Curezol 2MZ Azine | Evonik Operations | 6-[2-(2-Methyl-1H-imidazol-1-yl)ethyl]-1,3,5-triazin-2,4-diamin | - |
| Curezol 2PZ | Evonik Operations | 2-Phenylimidazol | - |

Gemäß nachfolgender Tabelle wurden die erfinderischen Beispiele 1 bis 6 und das nicht erfinderische Beispiel 7 (angelehnt an CN 110283425 A) in den benötigten Mengen angesetzt. Dazu wurden die Inhaltsstoffe nacheinander bei Raumtemperatur zusammengemischt. Dabei wurden grundsätzlich zuerst Epoxidharzkomponenten zusammen gemischt. Anschließend wurden alle festen Bestandteile der Formulierung nacheinander eingerührt. Zuletzt wurden in der Mischung die flüssigen Härter eingerührt.

Das Einmischen bzw. Einrühren erfolgte stets über den Einsatz eines Speedmixers der Firma Hauschild.

**Tab. 2: Zusammensetzungen der erfindungsgemäßen Beispiele 1 bis 6 und des nichterfindungsgemäßen Beispiels 7**

| | Einheit | Bsp. 1 | Bsp. 2 | Bsp. 3 | Bsp. 4 | Bsp. 5 | Bsp. 6 | Vergl.-Bsp. 7 |
|---|---|---|---|---|---|---|---|---|
| Vestamin IPD | g | - | - | - | - | - | 50 | |
| Amicure CG-1400F | g | 25 | 30 | 50 | 45 | 60 | 50 | 85 |
| Diaminodiphenylsulfon | g | | | | | | | 15 |
| Triacetondiamin | g | 75 | 70 | - | - | - | | |
| Triethylentetramin | g | - | - | 50 | - | 40 | | |
| Jeffamine D230 | g | - | - | - | 55 | - | | |
| Epikote 827 | g | - | 699 | - | 849 | 1210 | - | 1332 |
| Epikote 828 | g | - | - | - | - | - | 880 | |
| Epikote 862 | g | 595 | - | 1052 | - | - | - | |
| Araldite DY-D | g | - | - | - | - | - | 98 | |
| Maleinsäureanhydrid | % | 1,0 | 1,0 | 1,0 | - | 0,5 | - | 5,6 |
| Curezol 2MZ Azine | % | - | - | 1,0 | 2,0 | 2,0 | - | 0,4 |
| Curezol 2PZ | % | 1,5 | 1,5 | - | - | - | 4,0 | |
| Hexahydrophthalsäureanhydrid | % | - | - | - | 1,0 | - | 0,5 | |

Zur Charakterisierung der Epoxidsysteme wurden folgende Geräte und Methoden benutzt:
Rheometer MCR 301 von Anton-Paar Parameter (Umgang beschrieben in DIN 53019) Methode: Platte-Platte, isotherm, Amplitude Gamma = 2%, Frequenz f = 1 Hz, Temperaturbereich: 30 - 150 °C, Aufheizrate: 2K/min. Bestimmung der Ausgangsviskosität bei 30 °C und der Minimumsviskosität über die Temperatur.

Brookfield Rotationsviskosimeter RC30 von Rheotec (Umgang beschrieben in DIN 53019) Konzentrischer Zylinder, isotherm, Messpunktdauer 10 s.

Bestimmung der Anfangsviskosität (geringste gemessene Viskosität) bei Temperaturen <100 °C
Mettler DSC (Umgang beschrieben in DIN 11357)
Temperatur -30 bis +250 °C, Aufheizrate 10 K/ min
Bestimmung der Glasübergangstemperatur (Tg), Halbstufenmethode, Mittelpunkt DIN 51007 und der Reaktionsenthalpie (exothermer Wärmestrom)

Die gemischten Epoxidzusammensetzungen gemäß Tab. 2 wurden zunächst hinsichtlich ihrer Anfangsviskosität bei 30 °C untersucht.

Vor weiteren Charakterisierungen wurden die gemischten Epoxidzusammensetzungen zunächst bei 80 °C für 10 min im Labor-Trockenschrank gereift und so in einen B-Stage überführt.

Anschließend wurden die Proben mittels Rheometer charakterisiert und bei 23 °C für mehrere Wochen gelagert. Nach einer bzw. zwei Wochen wurden die gelagerten Proben mittels DSC charakterisiert.

Zudem wurden die Proben im Labor-Trockenschrank bei 150 °C für 5 min ausgehärtet und anschließend ebenfalls mittels DSC charakterisiert.

**Tab. 3: Ergebnisse für die erfindungsgemäßen Beispiele 1 bis 6 und das nicht erfindungsgemäße Beispiel 7**

| | Einheit | Bsp. 1 | Bsp. 2 | Bsp. 3 | Bsp. 4 | Bsp. 5 | Bsp. 6 | Vergl.-Bsp. 7 |
|---|---|---|---|---|---|---|---|---|
| Anfangsviskosität bei **30 °C** | | | | | | | | |
| Ausgangsviskosität | mPa*s | 2597 | 5344 | 5934 | 7015 | 9644 | 3219 | 2384 |
| 10 Minuten bei 80 **°C --> Vis kositä**t **smessu ng 30-150 °C 2K/min** | | | | | | | | |
| Viskosität bei 30°C | Pa*s | 102 | 128 | 1342 | 21 | 452 | 33 | 5,3 |
| MinimumsViskosität | Pa*s | 0,6 | 0,5 | 9,3 | 0,3 | 0,7 | 0,3 | 0,5 |
| Temperatur am Minimum | °C | 90 | 100 | 90 | 100 | 100 | 100 | 110 |
| **Härtung 10 Minuten bei 80 °C --> DSC nach 7d RT** | | | | | | | | |
| Exothermer Peak | °C | 155 | 153 | 149 | 138 | 140 | 138 | 184 |
| Exoth. Wärmestrom | J/g | 293 | 307 | 280 | 389 | 380 | 360 | 356 |
| Tg 1. Heizen | °C | 13 | 13 | -5 | -6 | -5 | -8 | -12 |
| Tg 2. Heizen | °C | 119 | 136 | 108 | 128 | 140 | 127 | 132 |
| **Härtung 10 Minuten bei 80 °C --> DSC nach 14d RT** | | | | | | | | |
| Exothermer Peak | °C | 155 | 152 | 149 | 138 | 142 | 138 | 184 |
| Exoth. Wärmestrom | J/g | 272 | 302 | 183 | 391 | 260 | 294 | 362 |
| Tg 1. Heizen | °C | 19 | 18 | 12 | 5 | 9 | 11 | -11 |
| Tg 2. Heizen | °C | 112 | 135 | 114 | 126 | 139 | 130 | 133 |
| **Härtung 10 Minuten bei 80 °C --> DSC Härtung 5 Minuten 150°C** | | | | | | | | |
| Exothermer Peak | °C | 176 | 170 | - | - | - | - | 184 |
| Exoth. Wärmestrom | J/g | 19 | 32 | - | - | - | - | 364 |
| Tg 1. Heizen | °C | 107 | 115 | 112 | 124 | 136 | 110 | -9 |
| Tg 2. Heizen | °C | 120 | 144 | 118 | 122 | 135 | 115 | 142 |

Wie in Tabelle 3 zu sehen, sind die Ausgangsviskositäten bei 30 °C zwischen den Beispielen 1-6 und dem Vergleichsbeispiel 7 sehr vergleichbar. Somit ist davon auszugehen, dass alle Formulierungen eine gute Faserimprägnierungen zeigen werden.

Nach Überführung in den B-Stage zeigen die Beispiele 1 - 6 eine deutlich erhöhte Viskosität, die bei 30 °C bei mindestens 21 Pa*s liegt. Vergleichsbeispiel 7 weist nur eine Viskosität von 5.4 Pa*s auf. Aufgrund der deutlich geringeren Viskosität im B-Stage ist davon auszugehen, dass Beispiel 7 in einem nachfolgenden Härtungs- bzw. Pressprozess leichter fließen würde und damit bspw. Schnittfasern nur unzureichend mittransportiert würden.

Die DSC-Analysen nach Lagerung bei Raumtemperatur zeigen sowohl nach einer bzw. zwei Wochen, dass alle Proben eine Glasübergangstemperatur T_{g} unterhalb von 20 °C haben. Sie sind somit noch weich und könnten damit gut in Prepreg- oder SMC-Prozessen gehandhabt werden. Der exotherme Peak, also die Temperatur, bei der die meiste Reaktionswärme frei wird, liegt für die Beispiele 1 - 6 bei 138 - 155 °C. Für Vergleichsbeispiel 7 liegt der Peak mit 185 °C deutlich höher. Dies ist ein Zeichen dafür, dass bei einer angestrebten Aushärtung bei 150 °C die Reaktion sehr langsam abläuft und es nur über lange Härtungszeiten zu einer finalen Aushärtung kommt. Dies bestätigt sich in den DSC-Analysen nach Aushärtung bei 150 °C für 5 min. Während die Beispiele 1 - 6 eine T_{g} im ersten Heizen von 100 °C oder höher erreicht haben, zeigt Vergleichsbeispiel 7 im ersten Heizen eine Tg von -9 °C und ist damit weit entfernt vom Zielwert von 100 °C.

## Patentansprüche

1. Zusammensetzung umfassend
A) 75 - 95 Gew.-% mindestens einer Epoxidverbindung,
B) 3 - 22 Gew.-% einer Härterzusammensetzung bestehend aus
B1) mindestens einer Verbindung mit mindestens zwei mit Epoxidgruppen der Komponente A) reaktiven Wasserstoffatomen und
B2) Dicyandiamid,
C) 0,2 - 4 Gew.-% mindestens eines Anhydrids und
D) 0,1 - 5 Gew.-% mindestens eines Härtungsbeschleunigers,
wobei sich die Gew.-%-Angaben beziehen auf die Summe der Komponenten A) bis D).

2. Zusammensetzung nach Anspruch 1,
**dadurch gekennzeichnet, dass**
die mindestens eine Epoxidverbindung ein Diglycidylether auf Basis von Bisphenol A und Bisphenol F mit einem Epoxidäquivalentgewicht von 150 bis 200 g/val ist.

3. Zusammensetzung nach Anspruch 1 oder 2
**dadurch gekennzeichnet, dass**
das stöchiometrische Verhältnis der Epoxid-Gruppen von A) und der Anzahl der reaktiven Wasserstoffatome von B) zwischen 2 : 1 und 1 : 2 beträgt.

4. Zusammensetzung nach einem der vorhergehenden Ansprüche,
**dadurch gekennzeichnet, dass**
die mindestens zwei reaktiven Wasserstoffatome Bestandteil identischer oder unterschiedlicher reaktiver Gruppen ausgewählt aus HO-, HS-, H₂N- und HN-Gruppen sind.

5. Zusammensetzung nach Anspruch 4,
**dadurch gekennzeichnet, dass**
die reaktiven Gruppen ausgewählt sind aus H₂N- und HN-Gruppen.

6. Zusammensetzung nach Anspruch 5,
**dadurch gekennzeichnet, dass**
die mindestens eine Verbindung B1) mit gegenüber Epoxidgruppen der Komponente A) reaktiven Wasserstoffatomen ausgewählt ist aus der Gruppe an Verbindungsklassen bestehend aus
- Aliphatischen Aminen,
- Oxyalkylenpolyaminen,
- Cycloaliphatischen Aminen,
- Aromatischen Aminen,
- Addukthärtern,
- Polyamidoaminhärtern, und
- Mannichbasenhärtern.

7. Zusammensetzung nach einem der vorhergehenden Ansprüche,
**dadurch gekennzeichnet, dass**
die mindestens eine Verbindung mit mindestens zwei mit Epoxidgruppen der Komponente A) reaktiven Wasserstoffatomen ausgewählt wird aus der Gruppe an Verbindungen bestehend aus 1,2-Ethylendiamin, 1,2 Propylendiamin, 1,3-Propylendiamin, 1,2-Butylendiamin, 1,3-Butylendiamin, 1,4 Butylendiamin, 2-(Ethylamino)ethylamin, 3-(Methylamino)propylamin, Diethylentriamin, Triethylentetramin, Tetraethylenpentamin, Pentaethylenhexamin, 2,2,4-Trimethylhexamethylendiamin, 2,4,4-Trimethylhexamethylendiamin, 2-Methyl-pentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), Dipropylentriamin, Isophorondiamin, 4,4'-Diaminodicyclohexylmethan, 2,4'-Diaminodicyclohexylmethan, 2,2'-Diaminodicyclohexylmethan, 3,3'-Dimethyl-4,4'-diamino-dicyclohexylmethan, N-Cyclohexyl-1,3-propandiamin, 1,2-Diaminocyclohexan, 3-(Cyclohexylamino)propylamin, Piperazin, N-Aminoethylpiperazin, TCD-Diamin, 4-Methylcyclohexan-1,3-diamin, Cyclohexan-1,3-diamin, Triacetondiamin und Oxyalkylenpolyaminen.

8. Zusammensetzung nach einem der vorhergehenden Ansprüche,
**dadurch gekennzeichnet, dass**
der Anteil der Härter-Komponente B2), bezogen auf die Gesamtmasse an Härter B1) und B2) 10 - 90 Gew.-% beträgt.

9. Zusammensetzung nach einem der vorhergehenden Ansprüche,
**dadurch gekennzeichnet, dass**
das mindestens eine Anhydrid C) ausgewählt wird aus der Gruppe bestehend aus Phthalsäureanhydrid, Hexahydrophthalsäureanhydrid, Methyl-1,2,3,6-Tetrahydrophthalsäureanhydrid, Hexachlorendomethylen-1,2,3,6-Tetrahydrophthalsäureanhydrid, Methylendomethylentetrahydrophthalsäureanhydrid, Maleinsäureanhydrid, Bernsteinsäureanhydrid, Alkyenylbernsteinsäureanhydriden (insbesondere Nonenyl- oder Dodecenylbernsteinsäureanhydrid), Polysebacinsäureanhydrid, Polaacelainsäureanhydrid, Pyrromellitsäuredianhydrid und Benzophenon-3,3',4,4'-tetracarboxylsäureanhydrid.

10. Zusammensetzung nach einem der vorhergehenden Ansprüche,
**dadurch gekennzeichnet, dass**
der mindestens eine Härtungsbeschleuniger D) ausgewählt wird aus der Gruppe bestehend aus organischen Säuren, tertiären Aminen, Hydroxylaminen, Uronen, Tetraalkylguanidinen, Imidazol, Imidazolderivaten, Phenol, Phenolderivaten und organischen und anorganischen Salzen und Komplexverbindungen.

11. Verfahren zur Herstellung einer Zusammensetzung nach einem der vorhergehenden Ansprüche, **dadurch gekennzeichnet, dass** mindestens eine Epoxidverbindung A), die Härterzusammensetzung B), mindestens ein Anhydrid C) und mindestens ein Härtungsbeschleuniger D) miteinander vermischt werden.

12. Verfahren nach Anspruch 11, **dadurch gekennzeichnet, dass**
1) zunächst die Härterkomponente B2) in der Komponente A) dispergiert,
2) dann die Komponenten C) und D) in die Mischung eingerührt oder dispergiert werden und
3) schließlich die Härterkomponente B1) eingerührt wird.

13. Verwendung einer Zusammensetzung nach einem der Ansprüche 1 bis 10 zur Herstellung von Halbzeugen im B-Stage oder lagerstabilen Composites.

14. Verfahren zur Herstellung eines Halbzeuges im B-Stage, bei dem ein faserförmiges Material mit einer Zusammensetzung nach einem der Ansprüche 1 bis 10 imprägniert und anschließend in einen B-Stage überführt wird.

15. Halbzeug im B-Stage, erhältlich nach einem Verfahren nach Anspruch 14.

16. Verfahren zur Herstellung eines Composites, bei dem
1) zunächst ein faserförmiges Material mit einer Zusammensetzung nach einem der Ansprüche 1 bis 10 imprägniert und anschließend in ein Halbzeug im B-Stage überführt wird,
2) und das Halbzeug im B-Stage zeitlich nachfolgend in einer Presse unter Temperatur- und Druckbeaufschlagung vollständig zum fertigen Composite ausgehärtet wird.

17. Composite, erhältlich nach einem Verfahren nach Anspruch 16.

18. Härterzusammensetzung bestehend aus B1) mindestens einer Verbindung mit mindestens zwei mit Epoxidgruppen der Komponente A) reaktiven Wasserstoffatomen und B2) Dicyandiamid, wobei B2) in Mengen von 10 - 90 Gew.-%, bezogen auf die Gesamtmenge aus B1) und B2), vorliegt.
